# EUROPÄISCHE PATENTSCHRIFT

(11) **EP 2 350 904 B1**
(45) Veröffentlichungstag und Bekanntmachung des Hinweises auf die Patenterteilung: **15.03.2017**
(21) Anmeldenummer: 09764177.3
(22) Anmeldetag: 29.09.2009
(51) Int. Cl.: G06F 21/62, G06F 21/34

(54) **VERFAHREN UND ANORDNUNG ZUM KONFIGURIEREN VON ELEKTRONISCHEN GERÄTEN**
METHOD TO CONFIGURE ELECTRONIC DEVICES
MÉTHODE POUR CONFIGURER DES APPAREILS ÉLECTRONIQUES

(30) Priorität: 30.09.2008 DE 102008049722
(43) Veröffentlichungstag der Anmeldung: 03.08.2011
(73) Patentinhaber: Unify GmbH & Co. KG, 80807 München (DE)
(72) Erfinder: FISCHER, Kai, 85598 Baldham (DE); KUNTE, Klaus-Josef, 33178 Borchen (DE); RANSMAYR, Viktor, 80686 München (DE); VAHLDIEK, Katrin, 85661 Forstinning (DE)
(74) Vertreter: Fritzsche, Thomas
(86) Internationale Anmeldenummer: PCT/EP2009/007004
(87) Internationale Veröffentlichungsnummer: WO 2010/037525

(56) Entgegenhaltungen:
- US-A1- 2001 015 919
- US-A1- 2001 032 318
- SCHNEIER B ED - SCHNEIER B: "Applied cryptography, second edition: protocols, algorithms, and source code in C" 1. Januar 1996 (1996-01-01), APPLIED CRYPTOGRAPHY : PROTOCOLS, ALGORITHMS, AND SOURCE CODE IN C, NEW YORK, NY : JOHN WILEY & SONS, US, PAGE(S) 28 - 29,169 , XP002985121 ISBN: 9780471128458 Section 9.3
- Cisco Systems: "Using eToken with Cisco IOS Software Release 12.3(14)T" Internet citation, [Online] 1. Januar 2007 (2007-01-01), Seiten 1-10, XP002568096 Gefunden im Internet: URL:http://www.cisco.com/en/US/prod/collat eral/modules/ps6247/prod_white_paper0900ae cd80275112.pdf> [gefunden am 2010-02-10]
- Cisco Systems: "USB eToken and USB Flash Features Support" Internet citation, [Online] 1. Januar 2007 (2007-01-01), XP002568097 Gefunden im Internet: URL:http://www.cisco.com/en/US/prod/collat eral/modules/ps6247/product_data_sheet0900 aecd80232473.pdf> [gefunden am 2010-02-10]

## Beschreibung

Die Erfindung betrifft ein Verfahren zum Konfigurieren von elektronischen Geräten, insbesondere Endgeräten, gemäß dem Oberbegriff des Anspruchs 1 sowie eine Anordnung zum Konfigurieren von elektronischen Geräten, insbesondere von Endgeräten gemäß dem Oberbegriff des Anspruchs 10.

Die Verwendung von Plastikkarten mit integrierten Chips, auch als so genannte "Smartcards" bezeichnet, ist allgemein bekannt. In der Regel bieten diese Karten dem Besitzer eine Möglichkeit des Zugangs oder Zugriffs zu Bereichen oder auf Daten, die nur einem beschränkten Kreis, insbesondere nur einer bestimmten Person zugänglich sind. Daher verfügen diese Karten über Daten, die für diese Funktion notwendig sind und daher als sensible bzw. geheime Daten gelten.

Solche Chipkarten enthalten in der Regel aus diesem Grund einen privaten Datenbereich, auf den nur nach einer erfolgreichen Authentifizierung, wie beispielsweise die Eingabe einer "Persönlichen Identifikationsnummer" (PIN) oder einer biometrischen Authentifizierung, zugegriffen werden kann, sowie einen öffentlichen Bereich, welcher auch ohne Authentifizierung zugänglich ist.

Smartcards werden aber auch zur automatisierten Konfiguration und Personalisierung von Produkten und Systemen verwendet. Hierzu werden Konfigurationsdaten in den Datenspeicher der Smartcard abgelegt, wobei sensitive Daten in analoger Weise im geschützten privaten Bereich abgelegt werden.
US 2001/00 15 19 A1 offenbart eine sichere Konfiguration eines feldprogrammierbaren Gate Array, wobei die Konfigurationsdaten verschlüsselt auf einem externen Speicherchip gespeichert sind.
US 6 192 436 B1 offenbart die Konfiguration eines elektronischen Gerätes, wobei die Konfigurationsdaten auf einer Smartcard gespeichert sind.

Ein Nachteil dieses Ansatzes entsteht dann, wenn das System vollständig automatisiert und ohne Benutzerinteraktion konfiguriert werden soll, beispielsweise weil das System keine entsprechende Schnittstelle anbietet, um eine PIN einzugeben, die Konfigurationsdaten aber dennoch schützenswürdig sind.

Dies ist z.B. bei den Siemens Hosted Szenarien und der BiaB der Fall, wo vorab im System ein Web Server aufgesetzt werden muss, damit eine PIN über den Web Browser eingegeben werden kann. Das Aufsetzten des Web Servers hat aber wiederum zur Folge, dass verschiedene Subsysteme konfiguriert werden müssen und hierfür z.B. auch Passwörter und shared secrets benötigt werden. Werden die Konfigurationsdaten im öffentlichen Teil der Smartcard gespeichert, besteht die Gefahr, dass bei einem Verlust der Karte, z.B. auf dem Transportweg oder auch in der Kundenumgebung, sensitive Daten ausgelesen und kompromittiert werden.

Zum anderen entstehen Probleme, wenn das Produkt oder System erst einmal (vor)konfiguriert werden muss, damit eine Authentifikation gegenüber der Smartcard überhaupt möglich ist.

Die der Erfindung zugrundeliegende Aufgabe ist es, ein Verfahren sowie eine Anordnung anzugeben, die die Nachteile des Standes der Technik überwindet.

Diese Aufgabe wird durch das Verfahren zum automatisierten Konfigurieren von elektronischen Geräten, bei dem im Rahmen der Konfiguration zumindest Teile von ersten Konfigurationsdaten auf einer Chipkarte einem elektronischen Gerät, insbesondere einem Endgerät, zugeführt werden gemäß Anspruch 1 gelöst. Ferner wird diese Aufgabe durch die Anordnung zum automatisierten Konfigurieren von elektronischen Geräten, insbesondere von Endgeräten bei dem im Rahmen der Konfiguration zumindest Teile von ersten Konfigurationsdaten auf einer Chipkarte einem elektronischen Gerät zugeführt werden, gemäß Anspruch 4, gelöst.

Die Erfindung betrifft ein Verfahren zum automatisierten Konfigurieren von elektronischen Geräten, insbesondere von Endgeräten bei dem im Rahmen der Konfiguration zumindest Teile von ersten Konfigurationsdaten auf einer Chipkarte einem Endgerät zugeführt werden, wobei die Konfigurationsdaten derart auf der Chipkarte als zweite Konfigurationsdaten abgelegt werden, dass die gespeicherten Daten das Ergebnis zumindest einer mindestens einem ersten Algorithmus folgenden Obfuskation sind. Ferner sind zumindest Teile des ersten Algorithmus seitens des elektronischen Gerätes herleitbar und es werden die gespeicherten zweiten Konfigurationsdaten geräteseitig derart einer De-Obfuskation unterworfen, dass sie in Kenntnis des ersten Algorithmus als erste Konfigurationsdaten wiederhergestellt und der Konfiguration des Endgerätes zugrunde gelegt werden.

Die Erfindung besteht weiterhin darin, dass die Herleitung auf Grundlage eines durch den ersten Algorithmus verwendeten in dem Endgerät gespeicherten ersten Geheimnisses erfolgt. Hierdurch wird der Aufwand zur Ermittlung der tatsächlichen Semantik der Daten für unberechtigte Dritte erschwert, da sie in der Regel nicht oder nur erschwert Zugriff auf des Endgerät haben.

Vorzugsweise Bei dem ersten Geheimnis handelt es sich um einen symmetrischen Verschlüsselungsschlüssel. Dies bietet eine weitere Aufwandserhöhung und somit Erhöhung der Sicherheit, da derlei Schlüssel nicht durch simples Erraten zufällig gefunden werden können bzw. nicht durch semantische Beziehung, wie sie beispielsweise bei der Verwendung von Namen oder (Geburts-)Daten gegeben sind, herleitbar sind.

Die Herleitung auf Grundlage eines durch den ersten Algorithmus verwendeten zweiten Geheimnisses ist eine Weiterbildung, bei der falls das erste Geheimnis von unberechtigten Dritten ermittelt oder gefunden wird, eine weitere Hürde installiert ist.

Dabei findet als zweites Geheimnis ein Initialisierungsvektor Verwendung.

Im elektronischen Gerät ist ein zweiter Algorithmus implementiert, welcher das zweite Geheimnis ermittelt, wodurch die Sicherheit dadurch gesteigert wird, dass keine Instanz den Endgeräten Geheimnisse zuordnen muss. Es wird lediglich die Instanz, die die Chipkarten ausgibt, involviert. Hierdurch wird eine Angriffsstelle weniger für das Abfangen und somit Auflösen des Geheimnisses geboten.

Dieser Vorteil kommt besonders zum Tragen, da das erfindungsgemäße Verfahren derart weitergebildet ist, dass das zweite Geheimnis auf Grundlage von zumindest einer auf der Chipkarte gespeicherter Information ermittelt wird.

Alternativ oder ergänzend kann das erfindungsgemäße Verfahren derart weitergebildet werden, dass das zweite Geheimnis auf Grundlage von zumindest einem Attribut der Chipkarte ermittelt wird.

Ebenfalls als Alternative oder auch ergänzend kann das zweite Geheimnis auf dem elektronischen Gerät, insbesondere dem Endgerät gespeichert werden.

Die erfindungsgemäße Anordnung zum automatisierten Konfigurieren von elektronischen Geräten, insbesondere von Endgeräten, bei dem im Rahmen der Konfiguration zumindest Teile von ersten Konfigurationsdaten auf einer Chipkarte einem elektronischen Gerät, insbesondere einem Endgerät, zugeführt werden, zeichnet sich durch Mittel zur Durchführung des Verfahrens bzw. einer der Weiterbildungen aus und leistet somit den vorteilhaften Beitrag, eine Implementierung zu bieten, die die Vorteile des Verfahrens verwirklicht.

Die Erfindung mit ihren Weiterbildungen hebt sich in vorteilhafter Weise über die aus dem Stand der Technik bekannten Lösungsansätze ab, wie dem Lösungsansatz, bei dem beispielsweise sensitive Daten immer in den privaten Datenbereich einer Smartcard gespeichert werden, was zwar den stärksten Schutz bietet, da die Daten erst nach Eingabe einer erfolgreichen Authentifikation ausgelesen werden aber nicht für alle Anwendungsszenarien geeignet ist oder beispielsweise einen Lösungsansatz, bei dem in den öffentlichen Teil der Smartcard eine temporäre Konfiguration abgelegt werd, die dann nach erfolgreicher Authentifikation durch die Konfiguration im privaten Teil überschrieben wird, die aber nicht für alle Daten und Konfigurationen in jedem Fall anwendbar ist. Außerdem ist mit diesem Ansatz eine automatisierte Konfiguration ohne Benutzereingabe grundsätzlich nicht möglich.

Das Wesen der erfinderischen Lösung besteht dagegen darin, dass sensitive Daten im öffentlichen Bereich der Smartcard derart abgelegt werden, dass sie durch Obfuskation von Daten transformiert wurden.

Data Obfuskation bezeichnet dabei die Transformation von Daten mit dem Ziel, die Ermittlung der Semantik und der Dateninhalte zu erschweren, gleichzeitig aber die wesentlichen Daten zu erhalten. Der diesen Prozess umkehrende Vorgang wird folgerichtig als De-Obfuskation bezeichnet.

Die Erfindung verhindert damit, dass sensitive Daten aus dem öffentlichen Bereich der Smartcard mit den heute bekannten Verfahren zum Angriff auf solche Daten gelesen werden können.

Ein Maß für die Güte einer Obfuscation ist hierbei der Aufwand, der für die De-Obfuscation betrieben werden muss. Durch die Anwendung des Verschlüsselungsschlüssels gemäß der Weiterbildung der Erfindung, bei dem die Datensätze mit Hilfe eines, insbesondere symmetrischen, Schlüssels und/oder eines Initialisierungsvektors verschlüsselt wird, steigt der Aufwand enorm.

Dabei kann der Initialisierungsvektor gemäß den Weiterbildungen einerseits mit den Daten abgelegt werden oder er wird aus einem Attribut der Smartcard ermittelt.

Die mit dieser Methode obfuskierten Daten werden auf die Smartcard abgelegt und sind ohne Kenntnis des Schlüssels nicht lesbar. Das System, das durch die Smartcard konfiguriert werden soll, verfügt ebenfalls über den symmetrischen Schlüssel und kann nach Ermittelung des Initialisierungsvektors die Daten de-obfuskieren.

Eine besonders vorteilhafte Weiterbildung der Erfindung ist das Ablegen von weiteren Dummy-Datensätzen, insbesondere mit Zufallszahlen oder anderen beliebigen Daten neben den obfuskierten sensiblen Daten. Dies hat den vorteilhaften Effekt, dass der konkrete Speicherort der Daten zu verschleiert wird.

Weitere vorteilhafte Weiterbildung der Erfindung stellt das Auflösen bzw. Erzeugen von Datenstrukturen dar, schließlich können mehrere einzelne Daten zu einem Datenkonstrukt zusammen gefasst und alternativ oder ergänzend das größere Datenobjekt in mehrere kleine Teile aufgespaltet werden. Durch die Strukturveränderung wird ebenfalls der Aufwand des Auslesens für unberechtigte Dritte erschwert.

Insgesamt ist es möglich, sensitive und schützenswürdige Daten in dem öffentlichen Datenspeicher einer Smartcard abzulegen, und gleichzeitig einen Schutz vor Kompromittierung der Daten zu gewährleisten. Daten für automatische Ablaufsteuerungen, wie beispielsweise Konfiguration und Personalisierung, können im öffentlichen Speicherbereich der Smartcard abgelegt und trotzdem geschützt werden, ohne jegliche Einschränkung für den vollständig automatischen Ablauf, wie z.B. durch Eingabe einer PIN durch den Benutzer.

Das Verfahren der erfinderischen Lösung erfordert keine Modifikation oder Neukonstruktion der in großen Stückzahlen weitverbreiteten Smartcards und Smartcard-Reader, respektive der Produkte und Systeme, die Smartcards nutzen.

Der inhärente Vorteil der Erfindung liegt darin, dass die obfuskierten Daten ohne Kenntnis des symmetrischen Schlüssels nicht oder nur mit extrem großem Aufwand an Zeit und Ressourcen erkannt werden können.

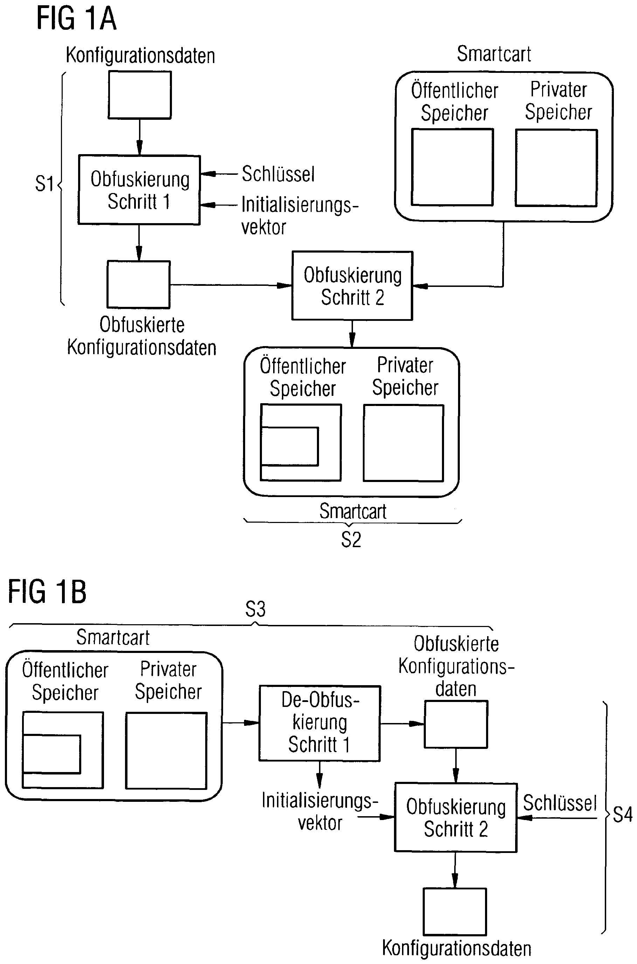

Weitere Vorteile sowie Details der Erfindung werden anhand eines in den Figuren 1a und 1b dargestellten Ausführungsbeispiels der Erfindung nachfolgend näher erläutert. Dabei zeigt die
Figur 1a schematisch vereinfacht den Ablauf des Obfuskierens gemäß einem Ausführungsbeispiel des erfindungsgemäßen Verfahrens und einer sie durchführenden Anordnung.
Figur 1b schematisch vereinfacht den Ablauf des De-Obfuskierens gemäß einem Ausführungsbeispiel des erfindungsgemäßen Verfahrens und einer sie durchführenden Anordnung.

In der Figur 1a sind vereinfacht als Datenblock dargestellte Konfigurationsdaten zu erkennen, die in einem ersten Schritt S1 einer erfindungsgemäßen Obfuskierung unterworfen wird.

Dies erfolgt gemäß dem Ausführungsbeispiel auf Grundlage eines Verschlüsselungsschlüssels sowie eines Initialisierungsvektors. Schematisch ist dies derart dargestellt, dass dem Prozess des Obfuskierens die Daten sowie des Schlüssels und des Vektors zugeführt werden.

Als Ergebnis liefert dieser Prozess obfuskierte Konfigurationsdaten. Diese Daten werden in einem zweiten Schritt S2 auf eine Smartcard aufgebracht, wobei sie in dem öffentlichen Speicher der Smartcard abgelegt werden.

Dabei kann im zweiten Schritt S2 eine zweite Stufe des Obfuskierens realisiert sein, die darin besteht, dass die Struktur der obfuskierten Daten aufgelöst und die Daten in einer sich von der ursprünglichen Struktur unterscheidenden Struktur im Speicher abgelegt wird.

Ferner kann die zweite Stufe alternativ oder ergänzend darin bestehen, dass den obfuskierten Daten weitere Daten hinzugefügt werden, die keinen Beitrag zur Semantik oder Funktion der Konfigurationsdaten leisten, sondern lediglich eine weitere Erschwerung des Erkennens des tatsächlichen Inhalts herbeiführen sollen.

Die im zweiten Schritt S2 auf diese Art manipulierte Smartcard kann nun als Grundlage für eine Konfiguration dienen.

Im Rahmen der Konfiguration wird, wie in Figur 1b schematisch dargestellt, in einem dritten Schritt S3 durch die ihrem Verwendungszweck zugeführte Smartcard zur Durchführung einer Konfiguration auf die gespeicherten obfuskierten Daten zugegriffen und in einer ersten Stufe einer De-Obfuskierung aus der Initialisierungsvektor extrahiert.

Danach werden in einem vierten Schritt S4 die obfuskierten Konfigurationsdaten sowie der Initialisierungsvektor einer zweiten Stufe dem Prozess der De-Obfuskierens zugeführt. Ferner wird hierzu ein Verschlüsselungsschlüssel dem Prozess der De-Obfuskierens zugeführt. Dieser Schlüssel ist entweder bereits auf der Smartcard gespeichert oder kann alternativ oder ergänzend zum Teil oder vollständig durch einen dem Berechtigten bekannten Algorithmus anhand von eineindeutigen Karteneigenschaften ermittelt werden und die Verschlüsselung rückgängig gemacht werden.

Nach Abschluss dieser Stufe stehen die de-obfuskierten Daten für die Durchführung der Konfiguration zur Verfügung.

## Patentansprüche

1. Verfahren zum automatisierten Konfigurieren von elektronischen Geräten, bei dem im Rahmen der Konfiguration zumindest Teile von ersten und schützenswürdigen Konfigurationsdaten auf einer Chipkarte mit einem öffentlichen und privaten Speicherbereich einem elektronischen Gerät, insbesondere einem Endgerät, zugeführt werden, **gekennzeichnet durch** folgende Schritte einer automatischen Ablaufsteuerung:
a) die ersten und schützenswürdigen Konfigurationsdaten werden derart im öffentlichen Speicherbereich auf der Chipkarte als zweite Konfigurationsdaten abgelegt, dass die gespeicherten Daten das Ergebnis zumindest einer mindestens einem ersten Algorithmus folgenden Obfuskation sind,
b) zumindest Teile der ersten und schützenswürdigen Konfigurationsdaten auf der Chipkarte sind seitens des elektronischen Gerätes herleitbar und
c) die gespeicherten zweiten Konfigurationsdaten werden geräteseitig derart einer De-Obfuskation unterworfen, dass sie in Kenntnis des ersten Algorithmus als erste Konfigurationsdaten wiederhergestellt und der Konfiguration des elektronischen Gerätes zugrunde gelegt werden,
d) dass die Herleitung nach Schritt b) auf Grundlage eines durch den ersten Algorithmus verwendeten und in dem elektronischen Gerät gespeicherten ersten Geheimnisses erfolgt, wobei als erstes Geheimnis ein symmetrischer Verschlüsselungsschlüssel Verwendung findet,
e) dass die Herleitung nach Schritt b) auf Grundlage eines durch den ersten Algorithmus verwendeten zweiten Geheimnisses erfolgt, wobei als zweites Geheimnis ein Initialisierungsvektor Verwendung findet und wobei dem elektronischen Gerät ein zweiter Algorithmus implementiert ist, welcher das zweite Geheimnis auf Grundlage von zumindest einer im öffentlichen Speicherbereich auf der Chipkarte gespeicherter Information ermittelt und wodurch, falls das erste Geheimnis von unberechtigten Dritten ermittelt oder gefunden wird, eine weitere Hürde installiert ist,
wobei **durch** die Implementierung des zweiten Algorithmus im elektronischen Gerät die Sicherheit **dadurch** gesteigert wird, dass keine Instanz dem elektronischen Gerät Geheimnisse zuordnen muss, da lediglich die Instanz, die die Chipkarten ausgibt, involviert ist, wodurch eine Angriffsstelle weniger für das Abfangen und somit Auflösen des zweiten Geheimnisses gegeben ist, und
wobei die automatische Ablaufsteuerung vollständig ohne Eingabe einer Authentifizierung, z. B. ohne Eingabe einer persönlichen Identifikationsnummer oder einer biometrischen Authentifizierung, **durch** den Benutzer erfolgt,
f) Ablegen von Dummy-Daten-Sätzen, insbesondere mit Zufallszahlen oder anderen beliebigen Daten neben den obfuskierten sensiblen Daten, wobei
- **durch** das Auflösen bzw. Erzeugen von Datenstrukturen mehrere einzelne Daten zu einem Datenkonstrukt zusammengefasst
und alternativ oder ergänzend
- ein größeres Datenobjekt in mehrere kleine Teile aufgespalten werden.

2. Verfahren nach Anspruch 1, **dadurch gekennzeichnet, dass** das zweite Geheimnis auf Grundlage von zumindest einem Attribut der Chipkarte ermittelt wird.

3. Verfahren nach einem der Ansprüche 1 und 2, **dadurch gekennzeichnet, dass** das zweite Geheimnis auf dem elektronischen Gerät gespeichert wird.

4. Anordnung zum automatisierten Konfigurieren von elektronischen Geräten, insbesondere von Endgeräten, bei dem im Rahmen der Konfiguration zumindest Teile von ersten und schützenswürdigen Konfigurationsdaten auf einer Chipkarte mit einem öffentlichen und privaten Speicherbereich einem elektronischen Gerät zugeführt werden, **gekennzeichnet durch** Mittel zur Durchführung des Verfahrens nach einem der vorhergehenden Ansprüche.

## Claims

1. A method to automatically configure electronic devices, in which, in the context of the configuration, at least parts of first protection-worthy configuration data on a chip card with a public and private memory area are supplied to an electronic device, in particular a terminal, **characterized by** the following steps of an automatic sequence control:
a) the first protection-worthy configuration data are stored in the public memory area on the chip card as second configuration data, so that the stored data are the result of at least one obfuscation according to at least one first algorithm,
b) at least parts of the first protection-worthy configuration data on the chip card are derivable by the electronic device, and
c) the stored second configuration data are subjected to a de-obfuscation on the device side in such a manner that, with the knowledge of the first algorithm, the data are reestablished as first configuration data and used as basis for the configuration of the electronic device,
d) in that the derivation according to step b) occurs on the basis of a first secret used by the first algorithm and stored in the electronic device, wherein, as first secret, a symmetric encryption key is used,
e) in that the derivation according to step b) occurs on the basis of a second secret used by the first algorithm, wherein, as second secret, an initialization vector is used, and wherein a second algorithm is implemented in the electronic device, second algorithm which determines the second secret on the basis of at least one information item stored in the public memory area on the chip card, and as a result of which, if the first secret is determined or found by unauthorized third parties, an additional hurdle is installed,
wherein, by the implementation of the second algorithm in the electronic device, the security is increased, since no entity needs to assign secrets in the electronic device, given that only the entity that issues the chip cards is involved, as a result of which there is one less attack site for the interception and thus the dissolution of the second secret, and
wherein the automatic sequence control is carried out entirely by the user without the entry of an authentication, for example, without the entry of a personal identification number or of a biometric authentication,
f) storing of dummy data sets, in particular with random numbers or any other data in addition to the obfuscated sensitive data, wherein
- due to the dissolution or generation of data structures, several individual data are combined to form a data construct
and alternatively or additionally
- a larger data object is split into several small parts.

2. The method according to Claim 1, **characterized in that** the second secret is determined on the basis of at least one attribute of the chip card.

3. The method according to any one of Claims 1 and 2, **characterized in that** the second secret is stored on the electronic device.

4. An arrangement for automatically configuring electronic devices, in particular terminals, in which, in the context of the configuration, at least parts of first protection-worthy configuration data on a chip card with a public and private memory area are supplied to an electronic device, **characterized by** means for carrying out the method according to any one of the preceding claims.

## Revendications

1. Méthode pour configurer automatiquement des appareils électroniques, dans laquelle dans le contexte de la configuration, au moins des parties des premières données de configuration dignes de protection sur une carte à puce avec une zone de mémoire publique et privée sont fournies à un appareil électronique, en particulier un terminal, **caractérisée par** les étapes suivantes d'une commande de séquence automatique :
a) les premières données de configuration dignes de protection sont stockées dans la zone de mémoire publique sur la carte à puce comme des secondes données de configuration de sorte que les données enregistrées soient le résultat d'au moins un obscurcissement selon au moins un premier algorithme,
b) au moins des parties des premières données de configuration dignes de protection sur la carte à puce peuvent être dérivées par l'appareil électronique et
c) les secondes données de configuration enregistrées sont soumises à un dé-obscurcissement sur le côté d'appareil de telle manière qu'avec la connaissance du premier algorithme, les données soient rétablies comme premières données de configuration et utilisées comme base pour la configuration de l'appareil électronique,
d) en ce que la dérivation selon l'étape b) apparaît sur la base du premier secret utilisé par le premier algorithme et enregistré dans l'appareil électronique, dans laquelle comme premier secret, une clé de chiffrement symétrique est utilisée,
e) en ce que la dérivation selon l'étape b) apparaît sur la base d'un second secret utilisé par le premier algorithme, dans laquelle comme second secret, un vecteur d'initialisation est utilisé et dans laquelle un second algorithme est implémenté dans l'appareil électronique, second algorithme qui détermine le second secret sur la base d'au moins un élément d'information enregistré dans la zone de mémoire publique sur la carte à puce, et suite à quoi, si le premier secret est déterminé ou trouvé par des tierces parties non autorisées, un obstacle supplémentaire est installé,
dans laquelle par l'implémentation du second algorithme dans l'appareil électronique, la sécurité est augmentée alors qu'aucune entité n'a besoin d'attribuer des secrets dans l'appareil électronique, étant donné que seule l'entité, qui délivre les cartes à puce, est impliquée, suite à quoi il y a un site d'attaque de moins pour l'interception et ainsi la dissolution du second secret, et
dans laquelle le contrôle de séquence automatique est entièrement réalisé par l'utilisateur sans l'entrée d'une authentification, par exemple sans l'entrée d'un numéro d'identification personnelle ou d'une authentification biométrique,
f) l'enregistrement d'ensembles de données fictives en particulier avec des nombres aléatoires ou toute autre donnée en plus des données sensibles obscurcies, dans laquelle
- en raison de la dissolution ou génération de structures de données, plusieurs données individuelles sont combinées pour former une construction de données et alternativement ou en outre
- un plus grand objet de données est divisé en plusieurs petites parties.

2. Méthode selon la revendication 1, **caractérisée en ce que** le second secret est déterminé sur la base d'au moins un attribut de la carte à puce.

3. Méthode selon l'une quelconque des revendications 1 et 2, **caractérisée en ce que** le second secret est enregistré sur l'appareil électronique.

4. Agencement pour configurer automatiquement des appareils électroniques, en particulier des terminaux, dans lequel dans le contexte de la configuration, au moins des parties de premières données de configuration dignes de protection sur une carte à puce avec une zone de mémoire publique et privée sont fournies à un dispositif électronique, **caractérisé par** des moyens pour réaliser la méthode selon l'une quelconque des revendications précédentes.
